# FASCICULE DE BREVET EUROPEEN

(11) **EP 1 172 034 B1**
(45) Date de publication et mention de la délivrance du brevet: **29.09.2004**
(21) Numéro de dépôt: 01440201.0
(22) Date de dépôt: 02.07.2001
(51) Int. Cl.: A01M 7/00

(54) **Pulvérisateur agricole**
Landwirtschaftliche Feldspritze
Agricultural sprayer

(30) Priorité: 13.07.2000 FR 0009177
(43) Date de publication de la demande: 16.01.2002
(73) Titulaire: Kuhn-Nodet S.A., 77876 Montereau (FR)
(72) Inventeur: Guesdon, Alain, 77123 Noisy sur Ecole (FR)
(74) Mandataire: Andres, Jean-Claude

(56) Documents cités:
- FR-A- 2 714 572
- US-A- 4 196 852

## Description

La présente invention concerne le domaine technique des pulvérisateurs agricoles, et elle se rapporte plus particulièrement à la commande de la vidange d'un incorporateur équipant une telle machine.

Les pulvérisateurs agricoles sont utilisés pour épandre, sous forme de gouttelettes, une bouillie de traitement sur des plantes. A cet effet, ils comportent divers éléments reliés entre eux par un circuit d'eau. Ces éléments sont notamment une cuve principale contenant la bouillie et des buses de pulvérisation destinées à répartir ladite bouillie sur les plantes à traiter. La pulvérisation consiste donc à pomper la bouillie, grâce au circuit d'eau, de la cuve principale jusqu'aux buses, celles-ci étant déplacées au-dessus des plantes à traiter.

Avant de procéder effectivement à la pulvérisation, l'utilisateur doit entre autres préparer la bouillie de traitement. En effet pour des raisons évidentes de stockage, le composé actif de la bouillie est généralement conditionné sous forme concentré dans des bidons. La préparation de la bouillie consiste donc à diluer un ou plusieurs composés actifs, par exemple des produits phytosanitaires, dans de l'eau. A cet effet et dans un souci de sécurité pour l'utilisateur, la plupart des pulvérisateurs agricoles comportent également un incorporateur. Celui-ci peut être fixe ou mobile par rapport au pulvérisateur, mais il est de préférence accessible depuis le sol. L'incorporateur se compose d'un bac dans lequel l'utilisateur déverse les bidons de composé actif. Lors de la préparation de la bouillie, le bac est vidangé via le circuit d'eau dans la cuve principale.

Sur les pulvérisateurs agricoles présents actuellement sur le marché et notamment le pulvérisateur décrit dans la demande de brevet **FR 2 714 572**, la vidange de l'incorporateur se fait au moyen d'une vanne de vidange commandée par une poignée. Lors de la préparation de la bouillie, l'utilisateur tourne cette poignée pour ouvrir la vanne de vidange et ainsi transvaser le composé actif contenu dans le bac vers la cuve principale. Ladite vanne de vidange et la poignée sont généralement disposées sous l'incorporateur. Or l'incorporateur est relativement proche du sol pour faciliter les opérations de déversement des bidons. Par conséquent l'utilisateur doit se baisser pour atteindre de la main ladite poignée. Ce geste est déjà pénible en soi, et il a également l'inconvénient d'approcher le visage de l'utilisateur du composé actif contenu dans l'incorporateur. Cette proximité augmente considérablement le risque d'accident. En effet les produits phytosanitaires, par exemple, sont généralement corrosifs : d'éventuelles projections peuvent donc provoquer des brûlures de la peau ainsi que des lésions aux yeux. De plus avec ce type de commande par poignée actuellement utilisé sur les pulvérisateurs agricoles, la vanne de vidange risque de rester ouverte, suite à un oubli de l'utilisateur, après la préparation de la bouillie. Lors de la pulvérisation par exemple, une telle situation peut entraîner un refoulement de la bouillie vers l'incorporateur, et ainsi occasionner la perte du contenu de la cuve principale.

Le but de la présente invention vise donc à remédier aux différents inconvénients de l'état de la technique en proposant un procédé de commande de la vidange de l'incorporateur qui permet de faciliter la préparation de la bouillie tout en réduisant les risques d'accident.

A cet effet, ledit procédé de commande de la vidange d'un incorporateur est caractérisé par le fait que l'utilisateur commande ladite vidange en agissant, avec au moins un de ses membres inférieurs, sur un organe de commande. Ainsi l'utilisateur peut d'une part utiliser ses deux mains pour la manipulation des bidons, et d'autre part maintenir son visage à l'écart des produits dangereux.

De plus, la présente invention concerne également un pulvérisateur agricole pour la mise en oeuvre de ce procédé de commande. Ledit pulvérisateur comporte donc un organe de commande et ladite vidange de l'incorporateur s'effectue au moyen d'une vanne. Selon une autre caractéristique de la présente invention, lorsque l'utilisateur n'agit plus sur l'organe de commande ladite vanne se referme automatiquement, ce qui isole ledit incorporateur du circuit d'eau. Par conséquent le contenu de la cuve principale ne risque pas de s'échapper, suite à un oubli de l'utilisateur, au travers de l'incorporateur.

D'autres caractéristiques de l'invention apparaîtront encore dans les autres sous-revendications et dans la description suivante d'un exemple de réalisation non limitatif de l'invention représenté sur les dessins annexés sur lesquels :
- la **figure 1** représente, en vue de coté et au transport, un pulvérisateur agricole conforme à l'invention,
- la **figure 2** représente, vu suivant le flèche I définie sur la figure 1, un incorporateur conforme à l'invention en position de transport,
- la **figure 3** représente, également vu suivant la flèche I, l'incorporateur de la figure 2 en position de remplissage.

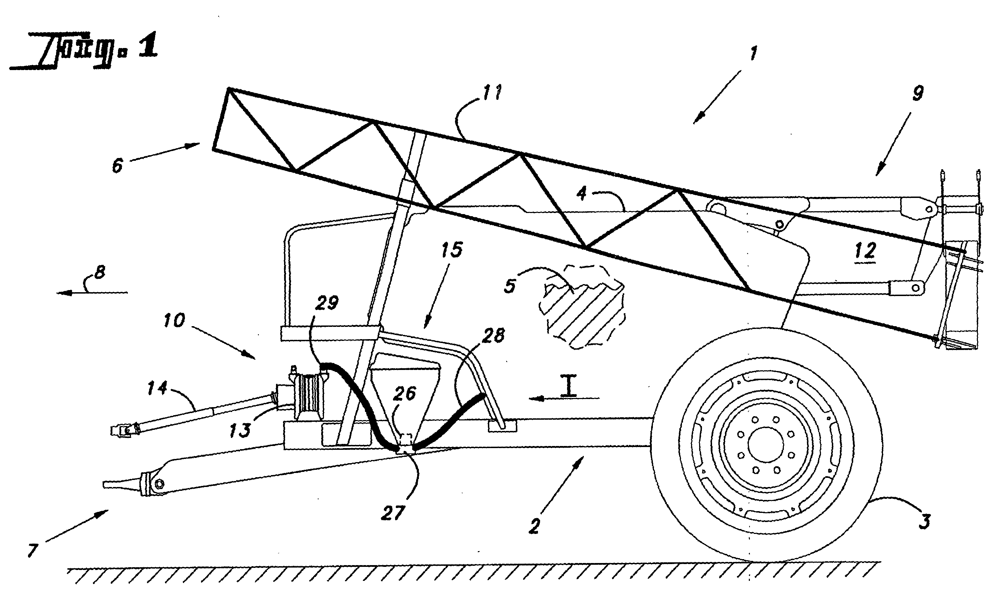

La figure 1 représente un pulvérisateur agricole (1), conforme à l'invention, en position de transport. Ledit pulvérisateur (1) comporte un châssis (2) qui roule sur le sol au moyen de deux roues (3). Ledit châssis (2) supporte d'une part une cuve principale (4) contenant une bouillie de traitement (5), et d'autre part une pluralité de buses de pulvérisation (non représentées) disposées à intervalle sensiblement régulier le long d'une rampe d'épandage (6). Ledit châssis (2) est lié, de manière connue, à un véhicule moteur (non représenté) au moyen d'un timon (7). Ledit véhicule moteur tracte ledit pulvérisateur (1) suivant une direction d'avance (8). Dans cet exemple de réalisation, ledit pulvérisateur (1) est donc de type traîné. Il va de soi que la présente invention concerne également des pulvérisateurs de type porté ainsi que des pulvérisateurs automoteurs.

Lors du travail, ledit pulvérisateur agricole (1) est déplacé, suivant ladite direction d'avance (8), sur un champ comportant des plantes à traiter. Ladite rampe d'épandage (6) est disposée transversalement à ladite direction d'avance (8), de part et d'autre d'un plan vertical médian dudit pulvérisateur (1). Pour sa part, ladite bouillie de traitement (5) est pompée depuis la cuve principale (4) pour être déposée, grâce auxdites buses de pulvérisation, sous forme de gouttelettes sur lesdites plantes.

Pour ce faire, ladite rampe d'épandage (6) est liée audit châssis (2) au moyen d'un dispositif de liaison (9), et ladite cuve principale (4) est raccordée auxdites buses au moyen d'un circuit d'eau (10) (partiellement représenté). Ladite rampe d'épandage (6) comprend, de manière connue, une structure en treillis (11) dont la partie inférieure supporte lesdites buses. Ladite structure en treillis (11) est avantageusement découpée en sections articulées entre elles. Ainsi lors du transport, ladite rampe (6) peut être repliée en plusieurs fois pour réduire la largeur hors-tout dudit pulvérisateur (1).

Afin d'adapter la hauteur de pulvérisation desdites buses à la taille plus ou moins grande des plantes à traiter, ledit dispositif de liaison (9) permet de déplacer ladite rampe d'épandage (6) par rapport audit châssis (2) suivant une direction sensiblement verticale. A cet effet, ledit dispositif de liaison (9) est constitué, dans cet exemple de réalisation, d'un unique quadrilatère (12) déformable qui s'étend au moins sensiblement suivant ledit plan vertical médian. Pour de plus amples détails sur ledit dispositif de liaison (9), l'homme du métier pourra se référer à la demande de brevet français enregistrée sous le numéro **00/03454**.

Pour sa part, ledit circuit d'eau (10) comporte au moins une pompe (13) entraînée, dans l'exemple de réalisation représenté sur la figure 1, par la prise de force du véhicule moteur au moyen d'un arbre de transmission à joints universels (14). Afin de raccorder ladite cuve principale (4) auxdites buses de pulvérisation, ledit circuit d'eau (10) comporte également une pluralité de conduites et de vannes.

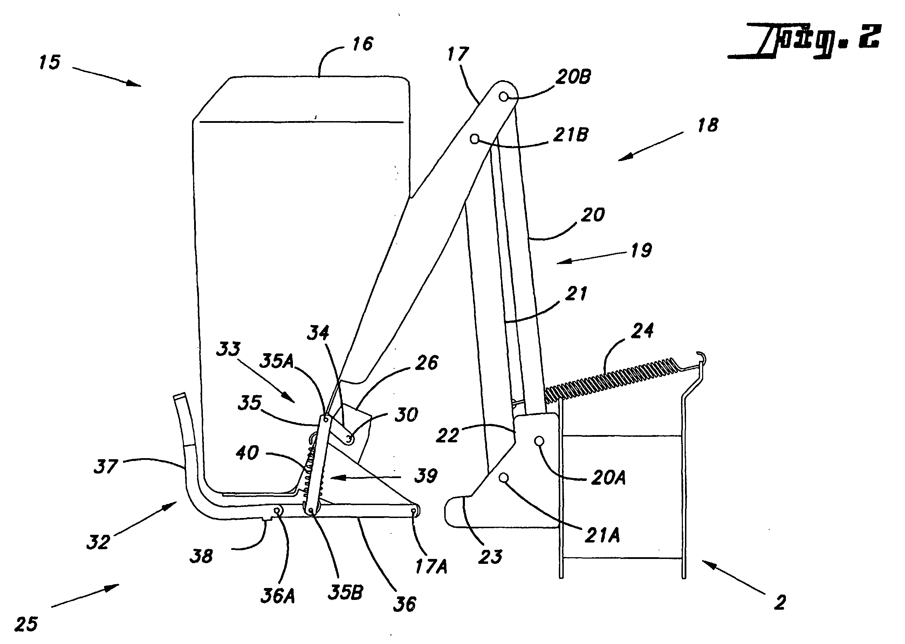

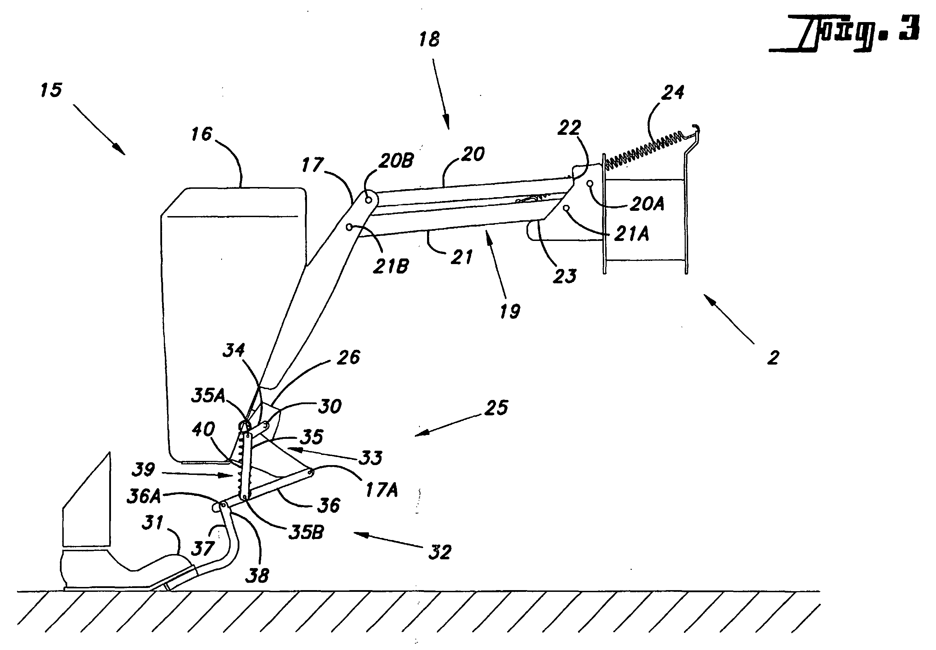

Ladite bouillie de traitement (5) est généralement obtenue en diluant un composé actif, par exemple un produit phytosanitaire, dans de l'eau. Pour ce faire, ledit pulvérisateur agricole (1) conforme à l'invention comporte en sus, d'une manière connue de l'homme du métier, un incorporateur (15) destiné à recevoir ledit composé actif. Ledit incorporateur (15) est avantageusement mobile par rapport audit pulvérisateur (1). Il peut ainsi occuper une position de transport (figures 1 et 2) ou une position de remplissage (figure 3). A cet effet et en se référant aux figures 2 et 3, ledit incorporateur (15) comporte un bac (16) supporté par une ossature (17). Pour sa part, ladite ossature (17) est liée audit châssis (2) au moyen d'un bras articulé (18).

Dans l'exemple de réalisation représenté sur les figures 2 et 3, ledit bras articulé (18) est réalisé sous la forme d'un parallélogramme (19) composé d'une bielle supérieure (20) et d'une bielle inférieure (21). Lesdites bielles (20, 21) sont liées, d'une part audit châssis (2) au moyen d'une articulation respective (20A, 21A), et d'autre part à ladite ossature (17) au moyen d'une articulation respective (20B, 21B). Lesdites articulations (20A, 21A, 20B, 21B) sont avantageusement du type pivot dont les axes respectifs sont sensiblement parallèles entre eux. Ledit parallélogramme (19) s'étend suivant un plan d'extension sensiblement vertical, et le débattement angulaire de la bielle inférieure (21) autour de l'articulation (21A) est délimité par deux butées (22, 23).

Ledit bras articulé (18) comporte avantageusement en sus un ressort de traction (24) lié d'une part audit châssis (2) et d'autre part à ladite bielle inférieure (21). Ledit ressort de traction (24) permet, d'une part, de maintenir ledit incorporateur en position de transport en plaquant ladite bielle inférieure (21) contre la butée supérieure (22). D'autre part, ledit ressort de traction (24) permet également de faciliter le déplacement dudit incorporateur (15) de la position de remplissage vers la position de transport en supportant au moins une partie du poids dudit incorporateur (15). Cependant, les points d'ancrage dudit ressort de traction (24) sont avantageusement déterminés de façon à ce que, en position de remplissage, ladite bielle inférieure (21) repose contre la butée inférieure (23) malgré la force exercée par le ressort de traction (24). Ledit incorporateur (15) peut ainsi donc être aisément translaté d'une position de transport facilitant, entre autres, les opérations de pulvérisation (figure 2) à une position de remplissage facilitant l'accès audit bac (16) (figure 3), et inversement.

Lors de la préparation de ladite bouillie de traitement (5), ledit bac (16) est destiné à recevoir le composé actif, lequel est généralement stocké sous forme concentrée dans des bidons. Pour ce faire, l'utilisateur tire vers lui ledit incorporateur (15) afin d'abaisser ce dernier en position de remplissage, et il vide lesdits bidons dans ledit bac (16). Ensuite, la dilution dudit composé actif s'effectue en vidangeant, via le circuit d'eau (10), ledit bac (16) dans ladite cuve principale (4). Finalement, l'utilisateur repousse ledit incorporateur (15) vers ledit châssis (2) afin de le remonter en position de transport. Selon un autre exemple de réalisation non représenté, ledit incorporateur (15) comporte en sus un dispositif permettant de rincer lesdits bidons et ledit bac (16) après usage.

Selon une caractéristique de la présente invention, l'utilisateur commande la vidange dudit incorporateur (15) en agissant avec au moins un de ses membres inférieurs sur un organe de commande (25). En procédant ainsi, l'utilisateur conserve avantageusement l'usage de ses deux mains pour la manipulation desdits bidons, d'où une réduction des risques d'accidents. A cet effet dans l'exemple de réalisation représenté sur les figures, ledit organe de commande (25) agit sur une vanne de vidange (26) qui relie ledit incorporateur (15) audit circuit d'eau (10). Plus précisément à la lumière de la figure 1, ladite vanne de vidange (26) est connectée entre le fond dudit bac (16) et l'orifice d'aspiration d'un injecteur (27). Ledit injecteur (27) est inséré dans une conduite (28) qui raccorde l'orifice de refoulement (29) de ladite pompe (13) à ladite cuve principale (4). D'une manière connue de l'homme de l'art, ladite vanne de vidange (26) comporte un axe de commande (30) dont la rotation détermine l'ouverture ou la fermeture de ladite vanne (26). Dans l'exemple de réalisation représenté plus particulièrement sur les figures 2 et 3, l'utilisateur commande la vidange dudit incorporateur (15) en agissant avec l'un de ses pieds (31). De ce fait, ledit organe de commande (25) comporte une pédale (32) actionnée par ledit pied (31) de l'utilisateur, et un mécanisme de renvoi (33) qui lie ladite pédale (32) audit axe de commande (30). Dans un autre exemple de réalisation non représenté, l'utilisateur commande ladite vidange en agissant avec ses deux pieds (31) sur un organe de commande (25).

Lors du transport ou de la pulvérisation, ledit incorporateur (15) et ses éléments annexes, comme par exemple l'organe de commande (25), ne doivent pas gêner leur bon déroulement. En contrepartie lors de la préparation de ladite bouillie de traitement (5), il va de soi que l'utilisateur doit pouvoir accéder très facilement audit organe de commande (25). A cet effet dans l'exemple de réalisation représenté sur les figures 2 et 3, l'organe de commande (25) est lié audit incorporateur (15) et il est disposé au plus près de celui-ci. Plus précisément, ladite pédale (32) est d'une part liée à ladite ossature (17) au moyen d'une articulation (17A), et d'autre part elle est avantageusement localisée sous ledit incorporateur (15). Ainsi lorsque ce dernier est abaissé en position de remplissage, ladite pédale (32) est relativement proche du sol donc très facile d'accès pour un pied (31) dudit utilisateur. De plus, ladite pédale (32) se compose avantageusement d'un élément de liaison (36) et d'un élément de contact escamotable (37) liés entre eux au moyen d'une articulation (36A). Ledit élément de contact (37) est destiné à recevoir ledit pied (31), et ledit élément de liaison (36) est lié à ladite ossature (17) au moyen de ladite articulation (17A). Ledit élément de contact (37) peut occuper une position de transport, comme visible sur la figure 2, où il épouse au plus près la forme dudit bac (16). Il peut également occuper une position de service, comme visible sur la figure 3, où il est facilement accessible par ledit pied (31).

Avant service, l'utilisateur éloigne ledit élément de contact (37) dudit bac (16) en le pivotant, d'environ 90 degrés vers le bas, par rapport audit élément de liaison (36) autour de ladite articulation (36A). En procédant de la sorte, ledit élément de contact (37) est une fois de plus rapproché du sol donc d'autant plus facile d'accès. La rotation dudit élément de contact (37) par rapport audit élément de liaison (36) autour de ladite articulation (36A) est limitée au moyen d'une butée (38). Ainsi une fois en position de service, toute force dirigée vers le bas et appliquée sur ledit élément de contact (37) engendre, cette fois-ci, une rotation de l'ensemble de ladite pédale (32) autour de l'articulation (17A), et par conséquent la commande de ladite vanne de vidange (26).

Après service, l'utilisateur rapproche cette fois-ci ledit élément de contact (37) dudit bac (16) en le pivotant, d'environ 90 degrés vers le haut, par rapport audit élément de liaison (36) autour de ladite articulation (36A). La rotation dudit élément de contact (37) par rapport audit élément de liaison (36) autour de ladite articulation (36A) est avantageusement limitée, également dans ce sens, au moyen de la même butée (38). Le maintien dudit élément de contact (37) dans la position de transport ou dans la position de service est réalisé par tout moyen connu de l'homme du métier, par exemple un ressort de traction.

Afin de simplifier ledit mécanisme de renvoi (33), ladite vanne de vidange (26) est également liée audit incorporateur (15), dans le voisinage immédiat de ladite pédale (32). De ce fait ledit mécanisme de renvoi (33) comporte une première biellette (34) liée d'une part audit axe de commande (30) et d'autre part à une extrémité d'une deuxième biellette (35) au moyen d'une première articulation (35A). La deuxième extrémité de ladite deuxième biellette (35) est, quant à elle, liée audit élément de liaison (36) au moyen d'une deuxième articulation (35B). Lesdites articulations (17A, 35A, 35B) sont avantageusement de type pivot dont les axes respectifs sont sensiblement parallèles à l'axe de commande (30). Ainsi l'action dudit pied (31) de l'utilisateur sur ladite pédale (32) est transformée en une rotation dudit axe de commande (30) de ladite vanne de vidange (26).

Selon une autre caractéristique de la présente invention, la vidange dudit incorporateur (15) s'interrompt automatiquement lorsque ledit utilisateur cesse d'agir sur l'organe de commande (25). A cet effet dans l'exemple de réalisation représenté, il est prévu un moyen de rappel (39) qui provoque la fermeture de ladite vanne de vidange (26) lorsque ledit organe de commande (25) n'est plus sollicité. Plus précisément à la lumière des figures 2 et 3, ledit moyen de rappel (39) se compose d'un ressort de rappel (40) lié d'une part à ladite pédale (32) et d'autre part à ladite ossature (17). Lorsque l'utilisateur retire son pied (31) de ladite pédale (32), ledit moyen de rappel (39) tend à ramener cette dernière dans sa position initiale et ainsi, via ledit mécanisme de renvoi (33), à refermer ladite vanne de vidange (26). De ce fait, lorsque la préparation de la bouillie (5) est terminée, ledit incorporateur (15) se trouve automatiquement isolé dudit circuit d'eau (10).

Le procédé de commande de la vidange dudit incorporateur (15) et le pulvérisateur agricole (1) qui viennent d'être décrits, ne sont que des exemples qui ne sauraient en aucun cas limiter le domaine de protection défini par les revendications suivantes.

En effet, ledit procédé de commande peut parfaitement agir sur d'autres moyens de vidange dudit incorporateur (15), par exemple une pompe ou d'autres types de vannes, mus électriquement ou pneumatiquement. De même, la présente invention concerne également les pulvérisateurs agricoles (1) dont l'incorporateur (15) est fixe.

## Revendications

1. Procédé de commande de la vidange d'un incorporateur (15) équipant un pulvérisateur agricole (1), ***caractérisé par le fait que*** ladite vidange est commandée par un utilisateur agissant avec au moins un de ses membres inférieurs sur un organe de commande (25).

2. Procédé de commande selon la revendication 1, ***caractérisé par le fait que*** ladite vidange s'effectue lorsque ledit utilisateur agit sur l'organe de commande (25).

3. Procédé de commande selon la revendication 1 ou 2, ***caractérisé par le fait que*** ladite vidange s'arrête lorsque ledit utilisateur cesse d'agir sur l'organe de commande (25).

4. Pulvérisateur agricole de mise en oeuvre du procédé selon l'une quelconque des revendications 1 à 3 comportant un incorporateur (15) raccordé à un circuit d'eau (10) au moyen d'une vanne de vidange (26) manoeuvrée par un organe de commande (25), ***caractérisé par le fait que*** ledit organe de commande (25) comporte une seule position stable.

5. Pulvérisateur agricole selon la revendication 4, ***caractérisé par le fait que*** lorsque l'organe de commande (25) est sollicité, ladite vanne de vidange (26) est ouverte.

6. Pulvérisateur agricole selon l'une des revendications 4 ou 5, ***caractérisé par le fait que*** lorsque l'organe de commande (25) n'est pas sollicité, ladite vanne de vidange (26) est automatiquement fermée.

7. Pulvérisateur agricole selon l'une des revendications 4 à 6, ***caractérisé par le fait que*** l'organe de commande (25) est lié audit incorporateur (15).

8. Pulvérisateur agricole selon l'une des revendications 4 à 7, ***caractérisé par le fait que*** l'organe de commande (25) est disposé sous ledit incorporateur (15).

9. Pulvérisateur agricole selon l'une des revendications 4 à 8, ***caractérisé par le fait que*** ledit organe de commande (25) est lié à ladite vanne de vidange (26) au moyen d'un mécanisme de renvoi (33) constitué de biellettes (34, 35).

10. Pulvérisateur agricole selon l'une des revendications 4 à 9, ***caractérisé par le fait que*** ledit organe de commande (25) est maintenu dans ladite position stable par un moyen de rappel (39).

11. Pulvérisateur agricole selon l'une des revendications 4 à 10, ***caractérisé par le fait que*** ledit organe de commande (25) est une pédale (32).

12. Pulvérisateur agricole selon la revendication 11, ***caractérisé par le fait que*** ladite pédale (32) comporte un élément de liaison (36) et un élément de contact (37).

13. Pulvérisateur agricole selon la revendication 12, ***caractérisé par le fait que*** ledit élément de contact (37) peut occuper une position de transport et une position de service.

14. Pulvérisateur agricole selon l'une des revendications 4 à 13, ***caractérisé par le fait que*** ledit incorporateur (15) est mobile.

15. Pulvérisateur agricole selon l'une des revendications 4 à 14, ***caractérisé par le fait que*** ladite vanne de vidange (26) est liée audit incorporateur (15) dans le voisinage immédiat dudit organe de commande (25).

## Patentansprüche

1. Verfahren zur Steuerung des Entleerens einer Einspülvorrichtung (15), mit der eine Feldspritze (1) versehen ist, ***dadurch gekennzeichnet,* dass** das Entleeren von einem Benutzer gesteuert wird, der mit mindestens einem seiner unteren Gliedmaßen auf ein Betätigungsglied (25) einwirkt.

2. Verfahren zur Steuerung nach Anspruch 1, ***dadurch gekennzeichnet,* dass** das Entleeren dann erfolgt, wenn der Benutzer auf das Betätigungsglied (25) einwirkt.

3. Verfahren zur Steuerung nach Anspruch 1 oder 2, ***dadurch gekennzeichnet,* dass** das Entleeren angehalten wird, wenn der Benutzer nicht mehr auf das Betätigungsglied (25) einwirkt.

4. Feldspritze zur Durchführung des Verfahrens nach irgend einem der Ansprüche 1 bis 3, die eine Einspülvorrichtung (15) aufweist, welche mittels eines durch ein Betätigungsglied (25) betätigten Entleerungsventils (26) an einem Wasserkreis (10) angeschlossen ist, ***dadurch gekennzeichnet,* dass** das Betätigungsglied (25) eine einzige stabile Position aufweist.

5. Feldspritze nach Anspruch 4, ***dadurch gekennzeichnet,* dass** das Entleerungsventil (26) geöffnet wird, wenn das Betätigungsglied (25) beaufschlagt wird.

6. Feldspritze nach einem der Ansprüche 4 oder 5, ***dadurch gekennzeichnet,* dass** das Entleerungsventil (26) automatisch geschlossen wird, wenn das Betätigungsglied (25) nicht mehr beaufschlagt wird.

7. Feldspritze nach irgend einem der Ansprüche 4 bis 6, ***dadurch gekennzeichnet,* dass** das Betätigungsglied (25) mit der Einspülvorrichtung (15) verbunden ist.

8. Feldspritze nach einem der Ansprüche 4 bis 7, ***dadurch gekennzeichnet,* dass** das Betätigungsglied (25) unter der Einspülvorrichtung (15) angeordnet ist.

9. Feldspritze nach einem der Ansprüche 4 bis 8, ***dadurch gekennzeichnet,* dass** das Betätigungsglied (25) mittels eines aus Stangen (34, 35) bestehenden Umlenkmechanismus (33) mit dem Entleerungsventil (26) verbunden ist.

10. Feldspritze nach einem der Ansprüche 4 bis 9, ***dadurch gekennzeichnet,* dass** das Betätigungsglied (25) durch ein Rückstellmittel (39) in der stabilen Position gehalten wird.

11. Feldspritze nach einem der Ansprüche 4 bis 10, ***dadurch gekennzeichnet,* dass** das Betätigungsglied (25) ein Pedal (32) ist.

12. Feldspritze nach Anspruch 11, ***dadurch gekennzeichnet,* dass** das Pedal (32) ein Verbindungselement (36) und ein Kontaktelement (37) aufweist.

13. Feldspritze nach Anspruch 12, ***dadurch gekennzeichnet,* dass** das Kontaktelement (37) eine Transportposition und eine Betriebsposition einnehmen kann.

14. Feldspritze nach einem der Ansprüche 4 bis 13, ***dadurch gekennzeichnet,* dass** die Einspülvorrichtung (15) beweglich ist.

15. Feldspritze nach einem der Ansprüche 4 bis 14, ***dadurch gekennzeichnet,* dass** das Entleerungsventil (26) in unmittelbarer Nähe des Betätigungsglieds (25) mit der Einspülvorrichtung (15) verbunden ist.

## Claims

1. Method for controlling the emptying of an induction unit (15) with which an agricultural sprayer (1) is equipped, ***characterized in* that** said emptying is controlled by a user acting with at least one of his lower limbs on a control member (25).

2. Control method according to Claim 1, ***characterized in* that** said emptying takes place when said user acts on the control member (25).

3. Control method according to Claim 1 or 2, ***characterized in* that** said emptying stops when said user stops acting on the control member (25).

4. Agricultural sprayer implementing the method according to any of Claims 1 to 3, comprising an induction unit (15) connected to a water circuit (10) by means of a drain valve (26) operated by a control member (25), ***characterized in* that** said control member (25) has only one stable position.

5. Agricultural sprayer according to Claim 4, ***characterized in* that** when the control member (25) is acted upon, said drain valve (26) is opened.

6. Agricultural sprayer according to one of Claims 4 or 5, ***characterized in* that** when the control member (25) is not acted upon, said drain valve (26) is automatically closed.

7. Agricultural sprayer according to one of Claims 4 to 6, ***characterized in* that** the control member (25) is connected to said induction unit (15).

8. Agricultural sprayer according to one of Claims 4 to 7, ***characterized in* that** the control member (25) is arranged under said induction unit (15).

9. Agricultural sprayer according to one of Claims 4 to 8, ***characterized in* that** said control member (25) is connected to said drain valve (26) by means of a transmission mechanism (33) consisting of link rods (34, 35).

10. Agricultural sprayer according to one of Claims 4 to 9, ***characterized in* that** said control member (25) is kept in said stable position by a return means (39).

11. Agricultural sprayer according to one of Claims 4 to 10, ***characterized in* that** said control member (25) is a pedal (32).

12. Agricultural sprayer according to Claim 11, ***characterized in* that** said pedal (32) has a connecting element (36) and a contact element (37).

13. Agricultural sprayer according to Claim 12, ***characterized in* that** said contact element (37) can occupy a transport position and a work position.

14. Agricultural sprayer according to one of Claims 4 to 13, ***characterized in* that** said induction unit (15) is mobile.

15. Agricultural sprayer according to one of Claims 4 to 14, ***characterized in* that** said drain valve (26) is connected to said induction unit (15) in the immediate vicinity of said control member (25).
